# EUROPEAN PATENT SPECIFICATION

(11) **EP 2 408 848 B1**
(45) Date of publication and mention of the grant of the patent: **25.06.2014**
(21) Application number: 10723391.8
(22) Date of filing: 16.03.2010
(51) Int. Cl.: C08J 3/00

(54) **A DISPERSION, AND A PROCESS FOR PRODUCING THE SAME**
DISPERSION UND HERSTELLUNGSVERFAHREN DAFÜR
DISPERSION ET PROCÉDÉ POUR PRODUIRE CETTE DISPERSION

(30) Priority: 16.03.2009 US 160440 P
(43) Date of publication of application: 25.01.2012
(73) Proprietor: Dow Global Technologies LLC, Midland, MI 48674 (US)
(72) Inventor: LUNDGARD, Richard, Midland MI 48642 (US); MALOTKY, David, Midland MI 48640 (US); KALINOWSKI, Matthew, Freeland MI 48623 (US); YOUNG, Timothy, Bay City MI 48708 (US); STRANDBURG, Gary, Mount Pleasant MI 48858 (US); MECCA, Jodi, Midland MI 48642 (US)
(74) Representative: Böhm, Brigitte
(86) International application number: PCT/US2010/027414
(87) International publication number: WO 2010/107748

(56) References cited:
- EP-A1- 0 414 351
- EP-A1- 1 953 199
- EP-A1- 1 972 651
- WO-A1-00/14145
- WO-A1-2008/051828
- WO-A2-92/13027
- WO-A2-02/060290
- WO-A2-2007/141123
- GB-A- 2 237 574
- US-A1- 2003 044 455

## Description

### Cross-Reference to Related Applications

This application is a non-provisional application claiming priority from the U.S. Provisional Patent Application No. 61/160,440, filed on March 16, 2009, entitled "A DISPERSION, AND A METHOD FOR PRODUCING THE SAME," the teachings of which are incorporated by reference herein, as if reproduced in full hereinbelow.

### Field of Invention

The present invention provides a dispersion, and a process for producing a dispersion.

### Background of the Invention

The use of dispersions in coating applications is generally known. Such coating application may include, but is not limited to, architectural coating applications, automotive coating applications, and industrial coating applications.

International Publication No. WO 2006/079098 A1 describes an aqueous dispersion of nanoparticles/polyurethane composites made by forming a mixture of nanoparticles and a continuous mass of polyurethane prepolymer in the substantial absence of water and dispersing the mixture so made in aqueous medium.

U.S. Patent Application Publication No. US 2008/0017071 A1 describes an aqueous dispersion comprising nanoscale polymer particles comprising organic binding agents, nanoparticles being contained in the latter as highly dispersed phase, in addition water and/or an aqueous colloidal solution of a metal oxide as continuous phase.

U.S. Patent No. 6,204,310 describes a continuous process for preparing a reactive particulate dispersion in a liquid carrier. The process comprises mixing together, as a melt, a resin and a crosslinker under extrusion conditions at a temperature and for a time such that substantial crosslinker potential is retained between the resin and the crosslinker and thereafter dispersing the mixture whilst still molten into the liquid carrier and allowing the molten dispersed mixture to solidify to form particles.

U.S. Patent Application Publication No. US 2002/0074681 A1 describes stable dispersions of solid, semi-solid, and liquid resins prepared by merging into a mechanical disperser a stream of a molten or liquid disperse phase with a stream of a molten or liquid continuous phase to form a dispersion or emulsion. A polymer that is preferably a solid at room temperature, but molten at some advanced temperature may be dispersed with low molecular weight polymers, or intermediate molecular weight polymers continuously in an extruder.

U.S. Patent No. 6,512,024 describes stable aqueous dispersions or emulsions prepared by merging into a mechanical disperser a stream of a molten or liquid disperse phase with a stream of a molten or liquid continuous phase to form a dispersion or emulsion. The molten or liquid disperse phase stream contains a polymer that is preferably a solid at room temperature, but molten at some advanced temperature. The polymer is formed in a molten state or formed and melted by a continuous reaction process such as an extrusion process, including melt extrusion or compound extrusion.

U.S. Patent Application Publication No. US 2007/0243481 A1 describes a compound that includes an aqueous dispersion, wherein the dispersion includes a thermoplastic resin and at least one stabilizing agent, and at least one selected from the group consisting of a colorant and a magnetic pigment.

However, there is still a need for a dispersion that provides improved properties. Furthermore, there is still a need for a process to produce a dispersion that provides improved properties.

### Summary of the Invention

The present invention provides a dispersion, and a process for producing a dispersion. The dispersion according to the present invention comprises (a) one or more subparticles selected from the group consisting of oxides, mixed oxides, carbides, borides, and nitrides of elements of the main groups II to IV and/or elements of the sub-groups I to VIII of the periodic table including the lanthanides, having an average particle size diameter in the range of 0.01 to 9 µm; (b) one or more base polymers at least partially encapsulating the one or more subparticles; wherein said at least partially encapsulated one or more subparticles have an average particle size diameter in the range of 0.05 to 10 µm; (c) one or more stabilizing agents; and (d) water as a liquid media; and is produced according to the following process. The present invention further provides a process for producing a dispersion comprising the steps of (1) selecting one or more subparticles selected from the group consisting of oxides, mixed oxides, carbides, borides, and nitrides of elements of the main groups II to IV and/or elements of the sub-groups I to VIII of the periodic table including the lanthanides, having an average particle size diameter in the range of 0.01 to 9 µm; (2) selecting one or more base polymers; (3) selecting one or more stabilizing agents; (4) selecting water as a liquid media; (5) optionally selecting one or more neutralizing agents; (6) melt-blending the one or more base polymers in the presence of the one or more subparticles; (7) thereby at least partially encapsulating the one or more subparticles with the one or more base polymers; (8) contacting said at least partially encapsulated one or more subparticles with water as the liquid media and the one or more stabilizing agents and optionally the one or more neutralizing agents; (9) thereby dispersing said at least partially encapsulated one or more subparticles in water as the liquid media, wherein said at least partially encapsulated one or more dispersed subparticles have an average particle size diameter in the range of 0.05 to 10 µm; and (10) thereby forming the dispersion.

### Brief Description of the Drawings

For the purpose of illustrating the invention, there is shown in the drawings a form that is exemplary; it being understood, however, that this invention is not limited to the precise arrangements and instrumentalities shown.
**Fig. 1** is a TEM picture of one exemplary inventive dispersion; and
**Fig. 2** is plot illustrating the relationship between opacity properties and pigment volume concentration (PVC).

### Detailed Description of the Invention

The present invention provides a dispersion, and a process for producing a dispersion. The dispersion according to the present invention comprises (a) one or more subparticles; (b) one or more base polymers at least partially encapsulating the one or more subparticles; wherein said at least partially encapsulated one or more subparticles have an average particle size diameter in the range of 0.05 to 10 µm; (c) one or more stabilizing agents; and (d) water as a liquid media; and is produced according to the following process. The present invention further provides a process for producing a dispersion comprising the steps of (1) selecting one or more subparticles selected from the group consisting of oxides, mixed oxides, carbides, borides, and nitrides of elements of the main groups II to IV and/or elements of the sub-groups I to VIII of the periodic table including the lanthanides, having an average particle size diameter in the range of 0.01 to 9 µm; (2) selecting one or more base polymers; (3) selecting one or more stabilizing agents; (4) selecting water as a liquid media; (5) optionally selecting one or more neutralizing agents; (6) melt-blending the one or more base polymers in the presence of the one or more subparticles; (7) thereby at least partially encapsulating the one or more subparticles with the one or more base polymers; (8) contacting said at least partially encapsulated one or more subparticles with water as the liquid media and the one or more stabilizing agents and optionally the one or more neutralizing agents; (9) thereby dispersing said at least partially encapsulated one or more subparticles in water as the liquid media, wherein said at least partially encapsulated one or more dispersed subparticles have an average particle size diameter in the range of 0.05 to 10 µm; and (10) thereby forming the dispersion.

### Subparticles

The dispersion of the present invention comprises one or more subparticles. The subparticles can be inorganic, organometallic, or organic in composition. One or more subparticles are selected from the group consisting of oxides, mixed oxides, carbides, borides, and nitrides of elements of the main groups II to IV and/or elements of the sub-groups I to VIII of the periodic table including the lanthanides. One or more subparticles may, for example, be selected from the group consisting of silicon dioxide, aluminum oxide, zinc oxide, cerium oxide, zirconium oxide, silicon dioxide, zirconium silicates, silicon carbides, wollastonites, aluminum silicates, aluminum hydroxide, aragonite, barium sulphate, calcite, calcium sulphate, magnesium hydroxide, magnesium carbonate, magnesite, ground calcium carbonate, precipitated calcium carbonate, titanium dioxide (e.g. rutile and/or anatase), satin white, silica, alumina trihydrate, mica, talc, clay, calcined clay, diatomaceous earth, vaterite, fumed silica, precipitated silica, carbon black, synthetic layered silicates, e.g. mica or fluoro mica, natural layered silicates, e.g. montmorillonite, hectorite, saponite, or vermiculite, nanoclays, e.g. natural or synthetic layered silicates containing modifiers improving intercalation and exfoliation, zinc borate, milled glass, aluminum trihydrate, antimony trioxide, fly ash, or any combination thereof.

In one alternative, one or more subparticles may comprise any mineral materials which can be produced by comminution or precipitation, and combinations thereof. In an alternative, one or more subparticles may be TiO₂ in either rutile form or anatase form. The dispersion of the instant invention comprises 1 to 95 percent by weight of one or more subparticles, based on the total weight of the solid content of the dispersion. All individual values and subranges from 1 to 95 weight percent are included herein and disclosed herein; for example, the weight percent can be from a lower limit of 1, 5, 10, 15, 20, 25, 30, 40, or 50 weight percent to an upper limit of 65, 75, 80, 85, 90, or 95 weight percent. For example, the dispersion may comprise from 1 to 90, or in the alternative, the dispersion may comprise from 10 to 85, or in the alternative from 15 to 85, or in the alternative from 20 to 85, or in the alternative from 30 to 85 percent by weight of one or more subparticles, based on the total weight of the solid content of the dispersion. A subparticle may be a nanoparticle, or a mesoparticle.

One or more nanoparticles may have an average particle size diameter in the range of from 0.01 to less than 0.1. All individual values and subranges from 0.01 to less than 0.1 µm are included herein and disclosed herein; for example, the average particle size diameter can be from a lower limit of 0.01, 0.02, 0.03, 0.05, or 0.07 µm to an upper limit of 0.02, 0.03, 0.05, 0.07, 0.08, 0.09, or less than 0.1 µm. For example, the one or more nanoparticles may have an average particle size diameter in the range of from 0.01 to 0.09 µm, or in the alternative 0.01 to 0.08 µm, or in the alternative 0.1 to 0.07 µm, or in the alternative 0.01 to 0.06 µm, or in the alternative 0.01 to 0.05 µm, or in the alternative 0.2 to 0.06 µm, or in the alternative 0.3 to 0.05 µm.

One or more mesoparticles may have an average particle size diameter in the range of from 0.1 to 9 µm. All individual values and subranges from 0.1 to 9 µm are included herein and disclosed herein; for example, the average particle size diameter can be from a lower limit of 0.1, 0.5, 1, 2, 3, 5, 7, or 8 µm to an upper limit of 1, 2, 3, 4, 5, 6, 7, 8, or 9 µm. For example, the one or more mesoparticles may have an average particle size diameter in the range of from 0.1 to 9 µm, or in the alternative 0.1 to 8 µm, or in the alternative 0.1 to 7 µm, or in the alternative 0.1 to 6 µm, or in the alternative 0.1 to 5 µm, or in the alternative 0.1 to 4 µm, or in the alternative 0.1 to 3 µm, or in the alternative 0.1 to 2 µm, or in the alternative 0.1 to 1 µm.

The one or more subparticles may be surface treated with inorganic materials, for example, silica, alumina, or organic materials, for example, polyol based treatment agents, fatty acids; or groups with combined organic and inorganic functionality, for example, organo silanes, organo phosphates, organo titanates, organo zirconates, so that the one or more subparticles are exhibiting optimum properties.

### Base Polymer

The dispersion of the present invention comprises from 5 to 99 percent by weight of one or more base polymers, based on the total weight of the solid content of the dispersion. All individual values and subranges from 5 to 99 weight percent are included herein and disclosed herein; for example, the weight percent can be from a lower limit of 5, 8, 10, 15, 20, 25 weight percent to an upper limit of 40, 50, 60,70, 80, 90, 95, or 99 weight percent. For example, the dispersion may comprise from 15 to 99, or in the alternative from 15 to 90, or in the alternative from 15 to 80 percent by weight of one or more base polymers, based on the total weight of the solid content of the dispersion. The dispersion comprises at least one or more base polymers. The base polymer may, for example, be selected from the group consisting of a thermoplastic material, and a thermoset material. The one or more base polymers may comprise one or more olefin based polymers, one or more acrylic based polymers, one or more polyester based polymers, one or more solid epoxy polymers, one or more thermoplastic polyurethane polymers, one or more styrenic based polymers, or combinations thereof.

Examples of thermoplastic materials include, but are not limited to, homopolymers and copolymers (including elastomers) of an alpha-olefins such as ethylene, propylene, 1-butene, 3-methyl-1-butene, 4-methyl-1-pentene, 3-methyl-1-pentene, 1-heptene, 1-hexene, 1-octene, 1-decene, and 1-dodecene, as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene-1-butene copolymer; copolymers (including elastomers) of an alpha-olefin with a conjugated or non-conjugated diene, as typically represented by ethylene-butadiene copolymer and ethylene-ethylidene norbornene copolymer; and polyolefins (including elastomers) such as copolymers of two or more alpha-olefins with a conjugated or non-conjugated diene, as typically represented by ethylene-propylene-butadiene copolymer, ethylene-propylene- dicyclopentadiene copolymer, ethylene-propylene-1,5-hexadiene copolymer, and ethylene-propylene-ethylidene norbornene copolymer; ethylene-vinyl compound copolymers such as ethylene-vinyl acetate copolymer, ethylene-vinyl alcohol copolymer, ethylene-vinyl chloride copolymer, ethylene acrylic acid or ethylene-(meth)acrylic acid copolymers, and ethylene-(meth)acrylate copolymer; styrenic copolymers (including elastomers) such as polystyrene, ABS, acrylonitrile-styrene copolymer, α-methylstyrene-styrene copolymer, styrene vinyl alcohol, styrene acrylates such as styrene methylacrylate, styrene butyl acrylate, styrene butyl methacrylate, and styrene butadienes and crosslinked styrene polymers; and styrene block copolymers (including elastomers) such as styrene-butadiene copolymer and hydrate thereof, and styrene-isoprene-styrene triblock copolymer; polyvinyl compounds such as polyvinyl chloride, polyvinylidene chloride, vinyl chloride-vinylidene chloride copolymer, polymethyl acrylate, and polymethyl methacrylate; polyamides such as nylon 6, nylon 6,6, and nylon 12; thermoplastic polyesters such as polyethylene terephthalate and polybutylene terephthalate; polycarbonate, polyphenylene oxide, and the like; and glassy hydrocarbon-based resins, including poly-dicyclopentadiene polymers and related polymers (copolymers, terpolymers); saturated mono-olefins such as vinyl acetate, vinyl propionate, vinyl versatate, and vinyl butyrate and the like; vinyl esters such as esters of monocarboxylic acids, including methyl acrylate, ethyl acrylate, n-butyl acrylate, isobutyl acrylate, 2-ethylhexyl acrylate, dodecyl acrylate, n-octyl acrylate, phenyl acrylate, methyl methacrylate, ethyl methacrylate, and butyl methacrylate and the like; acrylonitrile, methacrylonitrile, acrylamide, mixtures thereof; resins produced by ring opening metathesis and cross metathesis polymerization and the like. These resins may be used either alone or in combinations of two or more.

Examples of suitable (meth)acrylates, as base polymers, include methyl acrylate, ethyl acrylate, butyl acrylate, hexyl acrylate, 2-ethylhexyl acrylate, octyl acrylate and isooctyl acrylate, n-decyl acrylate, isodecyl acrylate, tert-butyl acrylate, methyl methacrylate, butyl methacrylate, hexyl methacrylate, isobutyl methacrylate, isopropyl methacrylate as well as 2-hydroxyethyl acrylate and acrylamide. The preferred (meth)acrylates are methyl acrylate, ethyl acrylate, butyl acrylate, 2-ethylhexyl acrylate, octyl acrylate, isooctyl acrylate, methyl methacrylate and butyl methacrylate. Other suitable (meth)acrylates that can be polymerized from monomers include lower alkyl acrylates and methacrylates including acrylic and methacrylic ester monomers: methyl acrylate, ethyl acrylate, n-butyl acrylate, t-butyl acrylate, 2-ethylhexyl acrylate, decyl acrylate, isobornyl acrylate, methyl methacrylate, ethyl methacrylate, n-propyl methacrylate, isopropyl methacrylate, n-butyl methacrylate, isobutyl methacrylate, sec-butyl methacrylate, cyclohexyl methacrylate, isodecyl methacrylate, isobornyl methacrylate, t-butylaminoethyl methacrylate, stearyl methacrylate, glycidyl methacrylate, dicyclopentenyl methacrylate, phenyl methacrylate.

In selected embodiments, base polymer may, for example, comprise a polyolefin selected from the group consisting of ethylene-alpha olefin copolymers, and propylene-alpha olefin copolymers. In particular, in select embodiments, the base polymer may comprise one or more nonpolar polyolefins.

In specific embodiments, polyolefins such as polypropylene, polyethylene, copolymers thereof, and blends thereof, as well as ethylene-propylene-diene terpolymers, may be used. In some embodiments, preferred olefinic polymers include homogeneous polymers, as described in U.S. Pat. No. 3,645,992 issued to Elston; high density polyethylene (HDPE), as described in U.S. Pat. No. 4,076,698 issued to Anderson; heterogeneously branched linear low density polyethylene (LLDPE); heterogeneously branched ultra low linear density polyethylene (ULDPE); homogeneously branched, linear ethylene/alpha-olefin copolymers; homogeneously branched, substantially linear ethylene/alpha-olefin polymers, which can be prepared, for example, by processes disclosed in U.S. Pat. Nos. 5,272,236 and 5,278,272, the disclosures of which are incorporated herein by reference; and high pressure, free radical polymerized ethylene polymers and copolymers such as low density polyethylene (LDPE) or ethylene vinyl acetate polymers (EVA).

In other particular embodiments, the base polymer may, for example, be ethylene vinyl acetate (EVA) based polymers. In other embodiments, the base polymer may, for example, be ethylene-methyl acrylate (EMA) based polymers. In other particular embodiments, the ethylene-alpha olefin copolymer may, for example, be ethylene-butene, ethylene-hexene, or ethylene-octene copolymers or interpolymers. In other particular embodiments, the propylene-alpha olefin copolymer may, for example, be a propylene-ethylene or a propylene-ethylene-butene copolymer or interpolymer.

In certain other embodiments, the base polymer may, for example, be a semi-crystalline polymer and may have a melting point of less than 110°C. In preferred embodiments, the melting point may be from 25 to 100°C. In more preferred embodiments, the melting point may be between 40 and 85°C.

In one particular embodiment, the base polymer is a propylene/alpha-olefin copolymer, which is characterized as having substantially isotactic propylene sequences. "Substantially isotactic propylene sequences" means that the sequences have an isotactic triad (mm) measured by ¹³C NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by ¹³C NMR spectra.

The propylene/alpha-olefin copolymer may have a melt flow rate in the range of from 0.1 to 15 g/10 minutes, measured in accordance with ASTM D-1238 (at 230° C / 2.16 Kg). All individual values and subranges from 0.1 to 15 g/10 minutes are included herein and disclosed herein; for example, the melt flow rate can be from a lower limit of 0.1 g/10 minutes, 0.2 g/10 minutes, or 0.5 g/10 minutes to an upper limit of 15 g/10 minutes, 10 g/10 minutes, 8 g/10 minutes, or 5 g/10 minutes. For example, the propylene/alpha-olefin copolymer may have a melt flow rate in the range of 0.1 to 10 g/10 minutes; or in the alternative, the propylene/alpha-olefin copolymer may have a melt flow rate in the range of 0.2 to 10 g/10 minutes.

The propylene/alpha-olefin copolymer has a crystallinity in the range of from at least 1 percent by weight (a heat of fusion of at least 2 Joules/gram) to 30 percent by weight (a heat of fusion of less than 50 Joules/gram). All individual values and subranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via DSC method, as described above. The propylene/alpha-olefin copolymer comprises units derived from propylene and polymeric units derived from one or more alpha-olefin comonomers. Exemplary comonomers utilized to manufacture the propylene/alpha-olefin copolymer are C₂, and C₄ to C₁₀ alpha-olefins; for example, C₂, C₄, C₆ and C₈ alpha-olefins.

The propylene/alpha-olefin copolymer comprises from 1 to 40 percent by weight of one or more alpha-olefin comonomers. All individual values and subranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer comprises from 1 to 35 percent by weight of one or more alpha-olefin comonomers; or in the alternative, the propylene/alpha-olefin copolymer comprises from 1 to 30 percent by weight of one or more alpha-olefin comonomers; or in the alternative, the propylene/alpha-olefin copolymer comprises from 3 to 27 percent by weight of one or more alpha-olefin comonomers; or in the alternative, the propylene/alpha-olefin copolymer comprises from 3 to 20 percent by weight of one or more alpha-olefin comonomers; or in the alternative, the propylene/alpha-olefin copolymer comprises from 3 to 15 percent by weight of one or more alpha-olefin comonomers.

The propylene/alpha-olefin copolymer has a molecular weight distribution (MWD), defined as weight average molecular weight divided by number average molecular weight (M_{w}/Mₙ) of 3.5 or less; in the alternative 3.0 or less; or in another alternative from 1.8 to 3.0.

Such propylene/alpha-olefin copolymers are further described in details in the U.S. Patent Nos. 6,960,635 and 6,525,157, incorporated herein by reference. Such propylene/alpha-olefin copolymers are commercially available from The Dow Chemical Company, under the tradename VERSIFY™, or from ExxonMobil Chemical Company, under the tradename VISTAMAXX™. In one embodiment, the propylene/alpha-olefin copolymers are further characterized as comprising (A) between 60 and less than 100, preferably between 80 and 99 and more preferably between 85 and 99, weight percent units derived from propylene, and (B) between greater than zero and 40, preferably between 1 and 20, more preferably between 4 and 16 and even more preferably between 4 and 15, weight percent units derived from at least one of ethylene and/or a C₄₋₁₀ α-olefin; and containing an average of at least 0.001, preferably an average of at least 0.005 and more preferably an average of at least 0.01, long chain branches/1000 total carbons. The maximum number of long chain branches in the propylene interpolymer is not critical to the definition of this invention, but typically it does not exceed 3 long chain branches/1000 total carbons. The term long chain branch, as used herein, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. Such propylene/alpha-olefin copolymers are further described in details in the U.S. Provisional Patent Application No. 60/988,999 and International Paten Application No. PCT/US08/082599, each of which is incorporated herein by reference.

In certain other embodiments, the base polymer, e.g. propylene/alpha-olefin copolymer, may, for example, be a semi-crystalline polymer and may have a melting point of less than 110°C. In preferred embodiments, the melting point may be from 25 to 100°C. In more preferred embodiments, the melting point may be between 40 and 85°C.

In other selected embodiments, olefin block copolymers, e.g., ethylene multi-block copolymer, such as those described in the International Publication No. WO2005/090427 and U.S. Patent Application Serial No. 11/376,835 may be used as the base polymer. Such olefin block copolymer may be an ethylene/α-olefin interpolymer:
(a) having a M_{w}/Mₙ from about 1.7 to about 3.5, at least one melting point, Tₘ, in degrees Celsius, and a density, d, in grams/cubic centimeter, wherein the numerical values of Tₘ and d corresponding to the relationship:
   Tₘ > -2002.9 + 4538.5(d) - 2422.2(d)²; or
(b) having a M_{w}/Mₙ from about 1.7 to about 3.5, and being characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH having the following relationships:
   ΔT > -0.1299(ΔH) + 62.81 for ΔH greater than zero and up to 130 J/g,
   ΔT ≥ 48°C for ΔH greater than 130 J/g,
   wherein the CRYSTAF peak being determined using at least 5 percent of the cumulative polymer, and if less than 5 percent of the polymer having an identifiable CRYSTAF peak, then the CRYSTAF temperature being 30 °C; or
(c) being characterized by an elastic recovery, Re, in percent at 300 percent strain and 1 cycle measured with a compression-molded film of the ethylene/α-olefin interpolymer, and having a density, d, in grams/cubic centimeter, wherein the numerical values of Re and d satisfying the following relationship when ethylene/α-olefin interpolymer being substantially free of a cross-linked phase:
   Re >1481-1629(d); or
(d) having a molecular fraction which elutes between 40 °C and 130 °C when fractionated using TREF, characterized in that the fraction having a molar comonomer content of at least 5 percent higher than that of a comparable random ethylene interpolymer fraction eluting between the same temperatures, wherein said comparable random ethylene interpolymer having the same comonomer(s) and having a melt index, density, and molar comonomer content (based on the whole polymer) within 10 percent of that of the ethylene/α-olefin interpolymer; or
(e) having a storage modulus at 25 °C, G' (25 °C), and a storage modulus at 100 °C, G' (100 °C), wherein the ratio of G' (25 °C) to G' (100 °C) being in the range of about 1:1 to about 9:1.

The ethylene/α-olefin interpolymer may also:
(a) have a molecular fraction which elutes between 40 °C and 130 °C when fractionated using TREF, characterized in that the fraction having a block index of at least 0.5 and up to about 1 and a molecular weight distribution, M_{w}/Mₙ, greater than about 1.3; or
(b) have an average block index greater than zero and up to about 1.0 and a molecular weight distribution, M_{w}/Mₙ, greater than about 1.3.

In certain embodiments, the base polymer may, for example, comprise a polar polymer, having a polar group as either a comonomer or grafted monomer. In exemplary embodiments, the base polymer may, for example, comprise one or more polar polyolefins, having a polar group as either a comonomer or grafted monomer. Exemplary polar polyolefins include, but are not limited to, ethylene-acrylic acid (EAA) and ethylene-methacrylic acid copolymers, such as those available under the trademarks PRIMACOR™, commercially available from The Dow Chemical Company, NUCREL™, commercially available from E.I. DuPont de Nemours, and ESCOR™, commercially available from ExxonMobil Chemical Company and described in U.S. Patent Nos. 4,599,392, 4,988,781, and 5,938,437, each of which is incorporated herein by reference in its entirety. Other exemplary base polymers include, but are not limited to, ethylene ethyl acrylate (EEA) copolymer, ethylene methyl methacrylate (EMMA), and ethylene butyl acrylate (EBA).

In one embodiment, the base polymer may, for example, comprise a polar polyolefin selected from the group consisting of ethylene-acrylic acid (EAA) copolymer, ethylene-methacrylic acid copolymer, and combinations thereof, and the stabilizing agent may, for example, comprise a polar polyolefin selected from the group consisting of ethylene-acrylic acid (EAA) copolymer, ethylene-methacrylic acid copolymer, and combinations thereof; provided, however, that base polymer may, for example, have a lower acid number, measured according to D-974, that the stabilizing agent.

In certain embodiments, the base polymer may, for example, comprise a polyester resin. Polyester resin refers to thermoplastic resins that may include polymers containing at least one ester bond. For example, polyester polyols may be prepared via a conventional esterification process using a molar excess of an aliphatic diol or glycol with relation to an alkanedioic acid. Illustrative of the glycols that can be employed to prepare the polyesters are ethylene glycol, diethylene glycol, propylene glycol, dipropylene glycol, 1,3-propanediol, 1,4-butanediol and other butanediols, 1,5-pentanediol and other pentane diols, hexanediols, decanediols, and dodecanediols. In some embodiments, the aliphatic glycol may contain from 2 to about 8 carbon atoms. Illustrative of the dioic acids that may be used to prepare the polyesters are maleic acid, malonic acid, succinic acid, glutaric acid, adipic acid, 2-methyl-1,6-hexanoic acid, pimelic acid, suberic acid, and dodecanedioic acids. In some embodiments, the alkanedioic acids may contain from 4 to 12 carbon atoms. Illustrative of the polyester polyols are poly(hexanediol adipate), poly(butylene glycol adipate), poly(ethylene glycol adipate), poly(diethylene glycol adipate), poly(hexanediol oxalate),and poly(ethylene glycol sebecate. Other embodiments of the present invention use polyester resins containing aliphatic diols such as UNOXOL (a mixture of cis and trans 1,3- and 1,,4-cyclohexanedimethanol) available from The Dow Chemical Company (Midland, MI).

In certain embodiments, the base polymer may, for example, comprise a thermoset material comprising an epoxy resin. Epoxy resin refers to a composition which possesses one or more vicinal epoxy groups per molecule, i.e. at least one 1,2-epoxy group per molecule. In general, such compound is a saturated or unsaturated aliphatic, cycloaliphatic, aromatic or heterocyclic compound which possesses at least one 1,2-epoxy group. Such compound can be substituted, if desired, with one or more non-interfering substituents, such as halogen atoms, hydroxy groups, ether radicals, lower alkyls and the like.

Illustrative epoxies are described in the Handbook of Epoxy Resins by H.E. Lee and K. Neville published in 1967 by McGraw-Hill, New York and U.S. Patent No. 4,066,628, incorporated herein by reference.

Particularly useful compounds which can be used in the practice of the present invention are epoxy resins having the following formula: 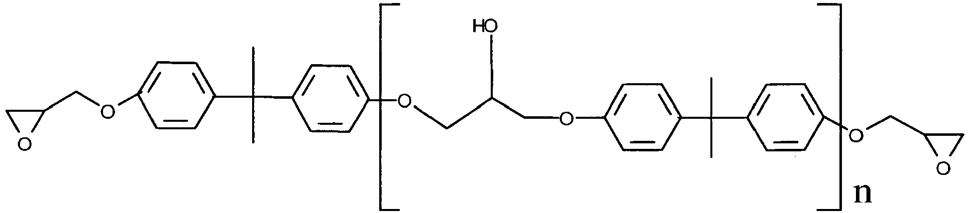 wherein n has an average value of 0 or more.

The epoxy resins useful in the present invention may include, for example, the glycidyl polyethers of polyhydric phenols and polyhydric alcohols. As an illustration of the present invention, examples of known epoxy resins that may be used in the present invention, include for example, the diglycidyl ethers of resorcinol, catechol, hydroquinone, bisphenol, bisphenol A, bisphenol AP (1,1-bis(4-hydroxylphenyl)-1-phenyl ethane), bisphenol F, bisphenol K, tetrabromobisphenol A, phenol-formaldehyde novolac resins, alkyl substituted phenol-formaldehyde resins, phenol-hydroxybenzaldehyde resins, cresol-hydroxybenzaldehyde resins, dicyclopentadienephenol resins, dicyclopentadiene-substituted phenol resins tetramethylbiphenol, tetramethyltetrabromobiphenol, tetramethyltribromobiphenol, tetrachlorobisphenol A and any combination thereof.

Examples of diepoxides particularly useful in the present invention include diglycidyl ether of 2,2-bis(4-hydroxyphenyl) propane (generally referred to as bisphenol A) and diglycidyl ether of 2,2-bis(3,5-dibromo-4-hydroxyphenyl) propane (generally referred to as tetrabromobisphenol A). Mixtures of any two or more polyepoxides can also be used in the practice of the present invention.

Other diepoxides which can be employed in the practice of the present invention include the diglycidyl ethers of dihydric phenols, such as those described in U.S. Patent Nos. 5,246,751; 5,115,075; 5,089,588; 4,480, 082 and 4, 438,254, all of which are incorporated herein by reference, or the diglycidyl esters of dicarboxylic acids such as those described in U. S. Pat. No. 5,171,820. Other suitable diepoxides include for example, αω-diglycidyloxyisopropylidene-bisphenol-based epoxy resins (commercially known as D.E.R.® 300 and 600 series epoxy resins, products of The Dow Chemical Company, Midland, Michigan).

The epoxy resins which can be employed in the practice of the present invention also include epoxy resins prepared either by reaction of diglycidyl ethers of dihydric phenols with dihydric phenols or by reaction of dihydric phenols with epichlorohydrin (also known as "taffy resins").

Exemplary epoxy resins include, for example, the diglycidyl ethers of bisphenol A; 4,4'-sulfonyldiphenol; 4,4- oxydiphenol; 4,4'-dihydroxybenzophenone; resorcinol; hydroquinone; 9,9'-bis(4-hydroxyphenyl)fluorene; 4,4'-dihydroxybiphenyl or 4,4'-dihydroxy-α-methylstilbene and the diglycidyl esters of the dicarboxylic acids.

Other useful epoxide compounds which can be used in the practice of the present invention are cycloaliphatic epoxides. A cycloaliphatic epoxide consists of a saturated carbon ring having an epoxy oxygen bonded to two vicinal atoms in the carbon ring for example as illustrated by the following general formula: 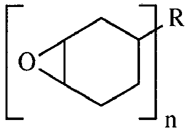 wherein R is a hydrocarbon group optionally comprising one or more heteroatoms (such as, without limitation thereto Cl, Br, and S), or an atom or group of atoms forming a stable bond with carbon (such as, without limitation thereto, Si, P and B) and wherein n is greater than or equal to 1.

The cycloaliphatic epoxide may be a monoepoxide, a diepoxide, a polyepoxide, or a mixture of those. For example, any of the cycloaliphatic epoxide described in U.S. Patent No. 3,686,359, incorporated herein by reference, may be used in the present invention. As an illustration, the cycloaliphatic epoxides that may be used in the present invention include, for example, (3,4-epoxycyclohexyl-methyl)-3,4-epoxy-cyclohexane carboxylate, bis-(3,4-epoxycyclohexyl) adipate, vinylcyclohexene monoxide and mixtures thereof.

In certain embodiments, the base polymer comprises a thermoplastic polyurethane polymer. Such thermoplastic polyurethane polymers are generally know, and further described, for example, in the International Publication No. 2008/057878, incorporated herein by reference to the extent that it describes a thermoplastic polyurethane polymer.

Those having ordinary skill in the art will recognize that the above list is a non-comprehensive listing of exemplary base polymers. It will be appreciated that the scope of the present invention is restricted by the claims only.

### Stabilizing Agent

The dispersion according to the present invention may further comprise at least one or more stabilizing agents, also referred to herein as dispersion agents, to promote the formation of a stable dispersion. The stabilizing agent may preferably be an external stabilizing agent. The dispersion of the instant invention comprises 1 to 50 percent by weight of one or more stabilizing agents, based on the total weight of the solid content of the dispersion. All individual values and subranges from 1 to 45 weight percent are included herein and disclosed herein; for example, the weight percent can be from a lower limit of 1, 3, 5, 10 weight percent to an upper limit of 15, 25, 35, 45, or 50 weight percent. For example, the dispersion may comprise from 1 to 25, or in the alternative from 1 to 35, or in the alternative from 1 to 40, or in the alternative from 1 to 45 percent by weight of one or more stabilizing agents, based on the total weight of the solid content of the dispersion. In selected embodiments, the stabilizing agent may be a surfactant, a polymer, or mixtures thereof. In certain embodiments, the stabilizing agent can be a polar polymer, having a polar group as either a comonomer or grafted monomer. In exemplary embodiments, the stabilizing agent comprises one or more polar polyolefins, having a polar group as either a comonomer or grafted monomer. Exemplary polymeric stabilizing agents include, but are not limited to, ethylene-acrylic acid (EAA) and ethylene-methacrylic acid copolymers, such as those available under the trademarks PRIMACOR™, commercially available from The Dow Chemical Company, NUCREL™, commercially available from E.I. DuPont de Nemours, and ESCOR™, commercially available from ExxonMobil Chemical Company and described in U.S. Patent Nos. 4,599,392, 4,988,781, and 5,938,437, each of which is incorporated herein by reference in its entirety. Other exemplary polymeric stabilizing agents include, but are not limited to, ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

Other stabilizing agents that may be used include, but are not limited to, long chain fatty acids, fatty acid salts, or fatty acid alkyl esters having from 12 to 60 carbon atoms. In other embodiments, the long chain fatty acid or fatty acid salt may have from 12 to 40 carbon atoms.

The stabilizing agent may be partially or fully neutralized with a neutralizing agent. In certain embodiments, neutralization of the stabilizing agent, such as a long chain fatty acid or EAA, may be from 25 to 200 percent on a molar basis; or in the alternative, it may be from 50 to 110 percent on a molar basis. For example, for EAA, the neutralizing agent may be a base, such as ammonium hydroxide or potassium hydroxide, for example. Other neutralizing agents can include lithium hydroxide or sodium hydroxide, for example. In another alternative, the neutralizing agent may, for example, be a carbonate. In another alternative, the neutralizing agent may, for example, be any amine such as monoethanolamine, or 2-amino-2-methyl-1-propanol (AMP). Amines useful in embodiments disclosed herein may include monoethanolamine, diethanolamine, triethanolamine, and TRIS AMINO (each available from Angus), NEUTROL TE (available from BASF), as well as triisopropanolamine, diisopropanolamine, and N,N-dimethylethanolamine (with the exception of N,N-dimethylethanolamine, each available from The Dow Chemical Company, Midland, MI). Other useful amines may include ammonia, monomethylamine, dimethylamine, trimethylamine, monoethylamine, diethylamine, triethylamine, mono-n-propylamine, dimethyl-n propylamine, N-methanol amine, N-aminoethylethanolamine, N-methyldiethanolamine, monoisopropanolamine, N,N-dimethyl propanolamine, 2-amino-2-methyl-1-propanol, tris(hydroxymethyl)-aminomethane, N,N,N'N'-tetrakis(2-hydroxylpropyl) ethylenediamine, 1.2-diaminopropane. In some embodiments, mixtures of amines or mixtures of amines and surfactants may be used. Those having ordinary skill in the art will appreciate that the selection of an appropriate neutralizing agent depends on the specific composition formulated, and that such a choice is within the knowledge of those of ordinary skill in the art.

Additional stabilizing agents that may be useful in the practice of the present invention include, but are not limited to, cationic surfactants, anionic surfactants, or non-ionic surfactants. Examples of anionic surfactants include, but are not limited to, sulfonates, carboxylates, and phosphates. Examples of cationic surfactants include, but are not limited to, quaternary amines. Examples of non-ionic surfactants include, but are not limited to, block copolymers containing ethylene oxide and silicone surfactants. Stabilizing agents useful in the practice of the present invention can be either external surfactants or internal surfactants. External surfactants are surfactants that do not become chemically reacted into the base polymer during dispersion preparation. Examples of external surfactants useful herein include, but are not limited to, salts of dodecyl benzene sulfonic acid and lauryl sulfonic acid salt. Internal surfactants are surfactants that do become chemically reacted into the base polymer during dispersion preparation. An example of an internal surfactant useful herein includes 2,2-dimethylol propionic acid and its salts. Additional surfactants that may be useful in the practice of the present invention include cationic surfactants, anionic surfactants, non-ionic surfactants, or combinations thereof. Various commercially available surfactants may be used in embodiments disclosed herein, including: OP-100 (a sodium stearate), OPK-1000 (a potassium stearate), and OPK-181 (a potassium oleate), each available from RTD Hallstar; UNICID 350, available from Baker Petrolite; DISPONIL FES 77-IS and DISPONIL TA-430, each available from Cognis; RHODAPEX CO-436, SOPROPHOR 4D384, 3D-33, and 796/P, RHODACAL BX-78 and LDS-22, RHODAFAC RE-610, and RM-710, and SUPRAGIL MNS/90, each available from Rhodia; and TRITON QS-15, TRITON W-30, DOWFAX 2A1, DOWFAX 3B2, DOWFAX 8390, DOWFAX C6L, TRITON X-200, TRITON XN-45S, TRITON H-55, TRITON GR-5M, TRITON BG-10, and TRITON CG-110, each available from The Dow Chemical Company, Midland, Michigan.

### Fluid Medium

The dispersion further comprises a fluid medium. The fluid medium is water.

The dispersion of the instant invention comprises 35 to 80 percent by volume of fluid medium, based on the total volume of the dispersion. In particular embodiments, the water content may be in the range of from 35 to 75, or in the alternative from 35 to 70, or in the alternative from 45 to 60 percent by volume, based on the total volume of the dispersion. Water content of the dispersion may preferably be controlled so that the solids content (base polymer plus stabilizing agent) is between about 1 percent to about 74 percent by volume. In particular embodiments, the solids range may be between about 10 percent to about 70 percent by volume. In other particular embodiments, the solids range is between about 20 percent to about 65 percent by volume. In certain other embodiments, the solids range is between about 25 percent to about 55 percent by volume.

### Additional components

The dispersion according to the present invention may further comprise optionally one or more binder compositions such as acrylic latex, vinyl acrylic latex, styrene acrylic latex, vinyl acetate ethylene latex, and combinations thereof; optionally one or more fillers; optionally one or more additives; optionally one or more pigments, e.g. titanium dioxide, mica, calcium carbonate, silica, zinc oxide, milled glass, aluminum trihydrate, talc, antimony trioxide, fly ash, and clay; optionally one or more co-solvents, e.g. glycols, glycol ether, 2,2,4-trimethyl-1,3-pentanediol monoisobutyrate, alcohols, mineral spirits, and benzoate esters; optionally one or more dispersants, e.g. aminoalcohols, and polycarboxylates; optionally one or more surfactants; optionally one or more defoamers; optionally one or more preservatives, e.g. biocides, mildewcides, fungicides, algaecides, and combinations thereof; optionally one or more thickeners, e.g. cellulosic based thickeners such as hydroxyethyl cellulose, hydrophobically modified alkali soluble emulsions (HASE thickeners such as UCAR POLYPHOBE TR-116) and hydroobically modified ethoxylated urethane thickeners (HEUR); or optionally one or more additional neutralizing agents, e.g. hydroxides, amines, ammonia, and carbonates.

### Additional Colorant Components

Embodiments of the present invention may also employ a colorant as part of the dispersion. A variety of colors may be used. Examples include colors such as yellow, magenta, and cyan. As a black coloring agent, carbon black, and a coloring agent toned to black using the yellow/magenta/cyan coloring agents shown below may be used. Colorants, as used herein, include dyes, pigments, and predispersions, among others. These colorants may be used singly, in a mixture, or as a solid solution. In various embodiments, pigments may be provided in the form of raw pigments, treated pigments, pre-milled pigments, pigment powders, pigment presscakes, pigment masterbatches, recycled pigment, and solid or liquid pigment predispersions. As used herein, a raw pigment is a pigment particle that has had no wet treatments applied to its surface, such as to deposit various coatings on the surface. Raw pigment and treated pigment are further discussed in PCT Publication No. WO 2005/095277 and U.S. Patent Application Publication No. 20060078485, the relevant portions of which are incorporated herein by reference. In contrast, a treated pigment may have undergone wet treatment, such as to provide metal oxide coatings on the particle surfaces. Examples of metal oxide coatings include alumina, silica, and zirconia. Recycled pigment may also be used as the starting pigment particles, where recycled pigment is pigment after wet treatment of insufficient quality to be sold as coated pigment.

Exemplary colorant particles include, but are not limited to, pigments such as yellow coloring agent, compounds typified by a condensed azo compound, an isoindolynone compound, an anthraquinone compound, an azometal complex methine compound, and an allylamide compound as pigments may be used. As a magenta coloring agent, a condensed azo compound, a diketopyrrolopyrrole compound, anthraquinone, a quinacridone compound, a base dye lake compound, a naphthol compound, a benzimidazolone compound, a thioindigo compound, and a perylene compound may be used. As a cyan coloring agent, a copper phthalocyanine compound and its derivative, an anthraquinone compound, a base dye lake compound, and the like may be used.

### Forming the Dispersion

The dispersion according to the present invention can be formed by any number of methods recognized by those having skill in the art. In one embodiment, one or more base polymers, one or more subparticles, and optionally one or more stabilizing agents are melt-kneaded in an extruder along with water and a neutralizing agent, such as ammonia, potassium hydroxide, or a combination of the two to form a dispersion. In another embodiment, one or more base polymers and one or more subparticles are compounded, and then the base polymer/subparticles compound is melt-kneaded in an extruder in the presence of an optional stabilizing agent, water, and one or more neutralizing agents thereby forming a dispersion. In some embodiments, the dispersion is first diluted to contain about 1 to about 3% by weight water and then, subsequently, further diluted to comprise greater than about 25% by weight water.

Any melt-kneading means known in the art may be used. In some embodiments, a kneader, a BANBURY^{®} mixer, single-screw extruder, or a multi-screw extruder, e.g. a twin screw extruder, is used. A process for producing the dispersions in accordance with the present invention is not particularly limited. For example, an extruder, in certain embodiments, for example, a twin screw extruder, is coupled to a back pressure regulator, melt pump, or gear pump. Exemplary embodiments also provide a base reservoir and an initial water reservoir, each of which includes a pump. Desired amounts of base and initial water are provided from the base reservoir and the initial water reservoir, respectively. Any suitable pump may be used, but in some embodiments, for example, a pump that provides a flow of about 150 cc/min at a pressure of 240 bar is used to provide the base and the initial water to the extruder. In other embodiments, a liquid injection pump provides a flow of 300 cc/min at 200 bar or 600 cc/min at 133 bar. In some embodiments, the base and initial water are preheated in a preheater.

One or more base polymers, in the form of pellets, powder, or flakes, are fed from the feeder to an inlet of the extruder where the resin is melted or compounded. One or more subparticles may be fed simultaneously with one or more base polymers into the extruder via the feeder; or in the alternative, one or more subparticles may be compounded into one or more base polymers, and then fed into the extruder via the feeder. In the alternative, additional one or more subparticles may further be metered via an inlet prior to the emulsification zone into the molten compound comprising one or more base polymers and optionally one or more subparticles. In some embodiments, the dispersing agent is added to one or more base polymers through and along with the resin and in other embodiments, the dispersing agent is provided separately to the twin screw extruder. The resin melt is then delivered from the mix and convey zone to an emulsification zone of the extruder where the initial amount of water and base from the water and base reservoirs are added through an inlet. In some embodiments, dispersing agent may be added additionally or exclusively to the water stream. In some embodiments, further dilution water may be added via water inlet from water reservoir in a dilution and cooling zone of the extruder. Typically, the dispersion is diluted to at least 30 weight percent water in the cooling zone. In addition, the diluted mixture may be diluted any number of times until the desired dilution level is achieved. In some embodiments, water is not added into the twin screw extruder but rather to a stream containing the resin melt after the melt has exited from the extruder. In this manner, steam pressure build-up in the extruder is eliminated and the dispersion is formed in a secondary mixing device such as a rotor stator mixer.

In one embodiment, the present invention further provides a process for producing a dispersion comprising the steps of (1) selecting one or more subparticles selected from the group consisting of oxides, mixed oxides, carbides, borides, and nitrides of elements of the main groups II to IV and/or elements of the sub-groups I to VIII of the periodic table including the lanthanides, having an average particle size diameter in the range of 0.01 to 9 µm; (2) selecting one or more base polymers; (3) selecting one or more stabilizing agents; (4) selecting water as a liquid media; (5) optionally selecting one or more neutralizing agents; (6) melt-blending the one or more base polymers in the presence of the one or more subparticles; (7) thereby at least partially encapsulating the one or more subparticles with the one or more base polymers; (8) contacting said at least partially encapsulated one or more subparticles with water as the liquid media and the one or more stabilizing agents and optionally the one or more neutralizing agents; (9) thereby dispersing said at least partially encapsulated one or more subparticles; wherein said at least partially encapsulated subparticles have an average particle size diameter in the range of 0.05 to 10 µm in water as the liquid media; and (10) thereby forming the dispersion.

### End-use Applications

The dispersions of the present invention may be used, for example, in different coating applications such as architectural coating applications, automotive coating applications, paper coating applications, seed coating applications, conductive coatings and industrial coating applications, adhesives applications, sealant applications, foam applications, toner applications, and controlled released coating applications.

### Examples

The following examples illustrate the present invention but are not intended to limit the scope of the invention.

### Inventive dispersion samples 1-4

Inventive dispersion samples 1-4 were prepared according to the following process.

### Inventive dispersion sample 1

Aqueous dispersions of TiO₂ encapsulated by AFFINITY GA 1900, an ethylene/octene copolymer having a density of approximately 0.87 g/cm³, available from The Dow Chemical Company, were prepared via an extruder where 50 g/min of AFFINITY GA 1900 resin, 116 g/min of TiO₂ (TI-PURE R-902plus, available from DuPont Corporation) and 6 g/min of the surfactant Pluronic F-108, available from BASF, were fed into a twin screw extruder to melt the resin and surfactant and incorporate the TiO₂. The resin/TiO₂/surfactant melt blend was forwarded and combined with 8.8 ml/min water and 6.4 g/min of the surfactant DOWFAX 2A1, available from The Dow Chemical Company. The resulting aqueous dispersion was forwarded within the extruder to the dilution zone where additional water was added to adjust the solids level to 56.1 weight percent. The product was cooled, and exited out of the extruder into a collection vessel. The resulting product had an average particle size diameter of 0.46 microns. A summary of the dispersion components is reported in Table 1. The tested properties of the inventive dispersions are reported in Table II.

### Inventive dispersion sample 2

Aqueous dispersions of TiO₂ encapsulated with PRIMACOR ethylene acrylic acid copolymer were prepared via an extruder where 50 g/min of PRIMACOR 5980i , available from The Dow Chemical Company, and 118 g/min of TiO₂ (TI-PURE R-902plus, available for DuPont Corporation) were fed into a twin screw extruder to melt the resin and incorporate the TiO₂. The resin/TiO₂ melt blend was forwarded and combined with 16 ml/min water containing 7 g/min of potassium hydroxide. The resulting aqueous dispersion was forwarded within the extruder to the dilution zone where additional water was added to adjust the solids level to 48.9 weight percent. The product was cooled and exited out of the extruder into a collection vessel. The resulting product had an average particle size diameter of 0.48 microns. A summary of the dispersion components is reported in Table 1. The tested properties of the inventive dispersions are reported in Table II.

### Inventive dispersion sample 3

Aqueous dispersions of TiO₂ encapsulated with polyester resin were prepared via an extruder where 29 g/min of FINETONE T-382-ES, available from Reichhold Chemical Company, and 24 g/min of TiO₂ (TI-PURE R-902plus, available from DuPont Corporation) were fed into a twin screw extruder to melt the resin and incorporate the TiO₂. The resin/TiO₂ melt blend was forwarded and combined with 13.5 ml/min water containing 1 g/min of triethanolamine. The resulting aqueous dispersion was forwarded within the extruder to the dilution zone where additional water was added to adjust the solids level to 38.7 weight percent. The product was cooled and exited the extruder into a collection vessel. The resulting product had an average particle size diameter of 0.58 microns. A summary of the dispersion components is reported in Table 1. The tested properties of the inventive dispersions are reported in Table II.

### Inventive dispersion sample 4

An aqueous dispersions of nanofine TiO₂ encapsulated with PRIMACOR ethylene acrylic acid copolymer was prepared via an extruder where 32.5 g/min of PRIMACOR 5980i, available from The Dow Chemical Company, and 21.7 g/min of nanofine TiO₂ (TAYCA MT100TV, available from Presperse, Inc.) were fed into a twin screw extruder to melt the resin and incorporate the nanofine TiO₂. The resin/nanofine TiO₂ melt blend was forwarded and combined with 17.6 ml/min water containing 3.6 g/min of potassium hydroxide. The resulting aqueous dispersion was forwarded within the extruder to the dilution zone where additional water was added to adjust the solids level to 40.3 weight percent. The product was cooled and exited out of the extruder into a collection vessel. The resulting product had an average particle size diameter of 0.1 microns. A summary of the dispersion components is reported in Table 1. The tested properties of the inventive dispersions are reported in Table II.

**Table I**

| | **Inventive Dispersion Sample 1** | **Inventive Dispersion Sample 2** | **Inventive Dispersion Sample 3** | **Inventive Dispersion Sample 4** |
|---|---|---|---|---|
| **Formulation (Based on Weight %)** | | | | |
| AFFINITY GA 1900 | 28.0 | --- | --- | --- |
| PRIMACOR 5980i | --- | 28.5 | --- | 56.2 |
| FINETONE T-382-ES | --- | --- | 54.0 | --- |
| TI-PURE R-902+ | 65.0 | 67.5 | 44.1 | --- |
| TAYCA MT100TV | --- | --- | --- | 37.6 |
| KOH (actives) | --- | 4.0 | --- | 6.2 |
| TEA (actives) tri-ethanol amine | --- | --- | 1.9 | --- |
| DOWFAX 2A1 (actives) | 3.6 | --- | --- | --- |
| PLURONIC F108 | 3.4 | --- | --- | --- |
| Totals (wt. %) | 100.0 | 100.0 | 100.0 | 100.0 |

| **Formulation (Based on Volume %)** | | | | |
|---|---|---|---|---|
| AFFINITY GA 1900 | 58.3 | --- | --- | --- |
| PRIMACOR 5980i | --- | 61.3 | --- | 83.9 |
| FINETONE T-382-ES | --- | --- | 78.0 | --- |
| TI-PURE R-902+ | 29.4 | 34.7 | 19.1 | --- |
| TAYCA MT100TV | --- | --- | --- | 11.9 |
| KOH (actives) | --- | 4.0 | --- | 4.2 |
| TEA (actives) tri-ethanol amine | --- | --- | 2.9 | --- |
| DOWFAX 2A1 (actives) | 6.5 | --- | --- | --- |
| PLURONIC F108 | 5.8 | --- | --- | --- |
| Totals (vol.%) | 100.0 | 100.0 | 100.0 | 100.0 |
| Resin Neutralization, % | --- | 90 | 62 | 90 |

**Table II**

| | **Inventive Dispersion Sample 1** | **Inventive Dispersion Sample 2** | **Inventive Dispersion Sample 3** | **Inventive Dispersion Sample 4** |
|---|---|---|---|---|
| Average Particle Size Diameter, µm | 0.46 | 0.48 | 0.58 | 0.10 |
| Polydispersity, Dv/Dn | 4.3 | 1.2 | 5.5 | 1.33 |
| Mode of Particle Size Diameter, µm | 0.36 | 0.47 | 0.30 | 0.11 |
| pH of dispersion | 8.0 | 10.7 | 7.6 | 10.5 |
| Measured Solids, wt.% | 56.1 | 48.9 | 38.7 | 40.3 |
| Inorganics (TGA). wt% | 65.0 | 71.5 | --- | --- |

### Inventive Coating Compositions 1-8

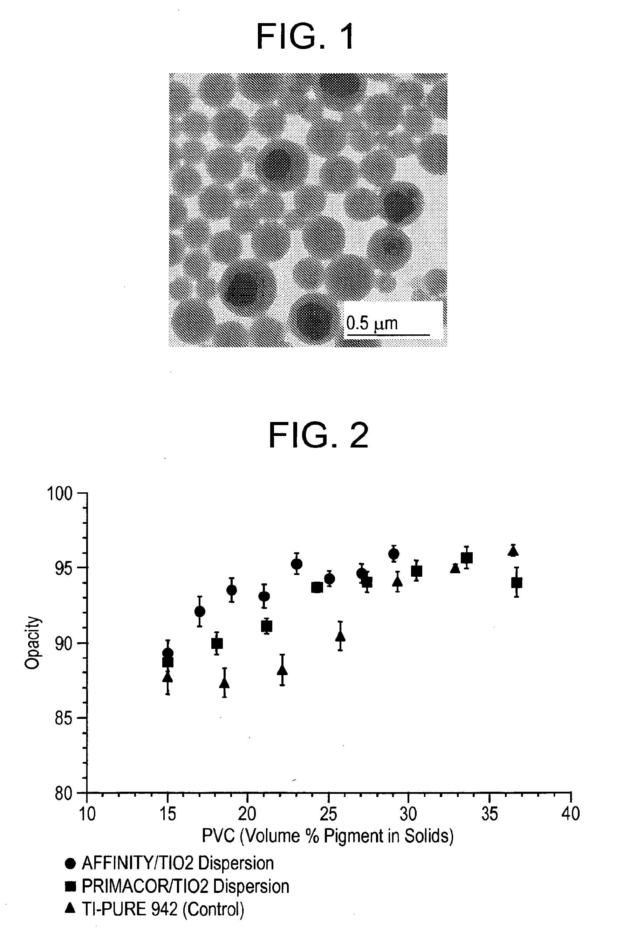

Inventive coating compositions 1-8 were prepared utilizing inventive dispersion sample 1, as described hereinabove, according to the following process. Initial masterbatch solutions consisting of an initial grind step where the inventive dispersion sample 1, a UCAR POLYPHOBE TR-116 thickener, water and base were added and mixed for 10 minutes at 1500 RPM with a Cowles blade. Additional latex and water was then added during mixing with a propeller type blade at 400 RPM. The masterbatch solutions were blended to obtain the desired range of pigment concentrations resulting in the final formulations listed in Table III. The formulation components of inventive coating compositions 1-8 are reported in Table III. The opacity properties of the inventive compositions 1-8 were also tested, and further reported in Table III, and Fig. 2.

**Table III**

| | Mass of component (g) | | | | | | |
|---|---|---|---|---|---|---|---|
| | POLYPHOBE TR116 (thickener) | Inventive Dispersion Sample 1 | water | AMP-95 (base) | UCAR Latex 625 (wet weight, acrylic latex) | Pigment Volume Concentration (PVC*) | Opacity (%) |
| Inventive Coating Comp. 1 | 0.047 | 2.646 | 3.507 | 0.007 | 0.793 | 15.0 | 89.3 |
| Inventive Coating Comp.2 | 0.047 | 2.943 | 3.324 | 0.007 | 0.680 | 17.0 | 92.1 |
| Inventive Coating Comp.3 | 0.046 | 3.240 | 3.140 | 0.007 | 0.567 | 19.0 | 93.5 |
| Inventive Coating Comp.4 | 0.046 | 3.537 | 2.957 | 0.007 | 0.453 | 21.0 | 93.1 |
| Inventive Coating Comp.5 | 0.046 | 3.834 | 2.773 | 0.007 | 0.340 | 23.0 | 95.3 |
| Inventive Coating Comp.6 | 0.046 | 4.131 | 2.590 | 0.007 | 0.227 | 25.0 | 94.3 |
| Inventive Coating Comp.7 | 0.046 | 4.428 | 2.406 | 0.007 | 0.113 | 27.0 | 94.6 |
| Inventive Coating Comp.8 | 0.046 | 4.725 | 2.223 | 0.007 | 0.000 | 29.0 | 95.9 |

| | | | | | | | |
|---|---|---|---|---|---|---|---|
| * PVC = Volume of TiO₂/ (Total Volume of Solids) * 100 | | | | | | | |

### Inventive Coating Compositions 9-16

Inventive coating compositions 9 -16 were prepared using inventive dispersion sample 2 without any stabilizing agent according to the following process. Initial masterbatch solutions consisting of an initial grind step where the inventive dispersion sample 1, CELLOSIZE QP 4400H HEC thickener, water and base (AMP-95) were added and mixed for 10 minutes at 1500 RPM with a Cowles blade. Additional latex and water was then added during mixing with a propeller type blade at 400 RPM. The masterbatch solutions were blended to obtain the desired range of pigment concentrations resulting in the final formulations listed in Table IV. The formulation components of inventive coating compositions 9-16 are reported in Table IV. The opacity properties of the inventive compositions 9-16 were also tested, and further reported in Table IV, and Fig. 2.

**Table IV**

| | Mass of component (g) | | | | | | |
|---|---|---|---|---|---|---|---|
| | Inventive Dispersion Sample 2 | 3 %HEC solution (hydroxy ethyl cellulose in water, as thickener) | water | AMP-95 (base) | UCAR 625 (wet weight, latex) | Pigment Volume Concentration (PVC*) | Opacity (%) |
| Inventive Coating Composition 9 | 2.742 | 1.241 | 2.007 | 0.007 | 1.004 | 15.0 | 88.7 |
| Inventive Coating Composition 10 | 3.193 | 1.220 | 1.720 | 0.007 | 0.860 | 18.1 | 90.0 |
| Inventive Coating Composition 11 | 3.643 | 1.200 | 1.433 | 0.007 | 0.717 | 21.2 | 91.1 |
| Inventive Coating Composition 12 | 4.094 | 1.179 | 1.147 | 0.007 | 0.573 | 24.3 | 93.7 |
| Inventive Coating Composition 13 | 4.545 | 1.158 | 0.860 | 0.007 | 0.430 | 27.4 | 94.1 |
| Inventive Coating Composition 14 | 4.996 | 1.137 | 0.573 | 0.007 | 0.287 | 30.5 | 94.8 |
| Inventive Coating Composition 15 | 5.446 | 1.117 | 0.287 | 0.007 | 0.143 | 33.5 | 95.7 |
| Inventive Coating Composition 16 | 5.897 | 1.096 | 0.000 | 0.007 | 0.000 | 36.6 | 94.0 |

| | | | | | | | |
|---|---|---|---|---|---|---|---|
| * PVC = Volume of TiO₂/ (Total Volume of Solid) * 100 | | | | | | | |

### Comparative Coating Compositions 1-7

Comparative coating compositions 1-7 were prepared according to the following process. Comparative coating compositions 1-7 were prepared by first formulating a set of masterbatches. Initial masterbatch solutions consisted of an initial grind step where the TI-PURE R-942 TiO₂ dispersion, commercially available from Du Pont Corporation, CELLOSIZE QP 4400H HEC thickener, water and a base (AMP-95) were added and mixed for 10 minutes at 1500 RPM with a Cowles blade. Additional latex and water were then added during mixing with a propeller type blade at 400 RPM. The masterbatch solutions were blended to obtain the desired range of pigment concentrations resulting in the final formulations listed in Table V. The formulation components of comparative coating compositions 1-7 are reported in Table V. The opacity properties of the comparative compositions 1-7 were also tested, and further reported in Table V, and Fig. 2.

**Table V**

| | Mass of component (g) | | | | | | |
|---|---|---|---|---|---|---|---|
| | 3 % HEC solution | TI- PURE R942 | water | AMP-95 | UCAR Latex 625 (wet weight, acrylic latex) | Pigment Volume Concentration (PVC) | Opacity (%) |
| Comparative Coating Composition 1 | 1.232 | 1.242 | 3.092 | 0.007 | 1.427 | 15.0 | 87.7 |
| Comparative Coating Composition 2 | 1.207 | 1.471 | 2.970 | 0.007 | 1.345 | 18.6 | 87.3 |
| Comparative Coating Composition 3 | 1.182 | 1.700 | 2.848 | 0.007 | 1.264 | 22.1 | 88.2 |
| Comparative Coating Composition 4 | 1.157 | 1.928 | 2.725 | 0.007 | 1.182 | 25.7 | 90.5 |
| Comparative Coating Composition 5 | 1.132 | 2.157 | 2.603 | 0.007 | 1.100 | 29.3 | 94.1 |
| Comparative Coating Composition 6 | 1.107 | 2.386 | 2.481 | 0.007 | 1.018 | 32.8 | 95.0 |
| Comparative Coating Composition 7 | 1.083 | 2.615 | 2.359 | 0.007 | 0.937 | 36.4 | 96.1 |

### Inventive dispersion samples 5-8

Inventive Dispersions 5-8 were made according to the following process.

### Inventive dispersion samples 5-6

The inventive dispersions were made according to the following procedure. One or more base polymer resins, one or more polymeric stabilizing agent resins, and one or more hydrophobic particulate fillers, as shown in Table VI, were selected, and fed into a twin screw extruder simultaneously. Pellets of AFFINITY 8200 and pellets of PRIMACOR 5980 were physically mixed together in a ratio of 85 parts AFFINITY to 15 parts PRIMACOR 5980 prior to addition to the extruder with a Schenck Mechatron loss in weight solids feeder. The pressure in the extruder was maintained at 300 psi throughout the run. These components were melt blended in the compounding zone of the extruder thereby forming a melt blended compound. Subsequently, water and base was metered into the extruder, and the melt blended compound was contacted with water in the presence of the base. Further water was metered into the extruder thereby further diluting the dispersion. The formulations for inventive dispersions are reported in Table VI. The extrusion conditions are reported in Table VII. The inventive dispersions were tested for their properties, and those properties are listed in Table VIII. The inventive dispersions were applied to a cellulosic based substrate, i.e. paper boards supplied from Stora Enso Oyj. Having a gramage of approximately 240 g/m². The properties of the inventive coated substrates 1-2 were tested, and reported in Table IX.

The comparative dispersions were made according to the following procedure. One or more base polymer resins, and one or more polymeric stabilizing agent resins, as shown in Table VI, were selected, and fed into a twin screw extruder simultaneously. These components were and melt blended in the compounding zone of the extruder thereby forming a melt blended compound. Subsequently, water and base was metered into the extruder, and the melt blended compound was contacted with water in the presence of the base. Further water is metered into the extruder thereby further diluting the dispersion. The formulation components for comparative dispersions are reported in Table VI. The extrusion conditions are shown in Table VII. The comparative dispersions were tested for their properties, and those properties are listed in Table VIII. The comparative dispersions were applied to cellulosic based substrates, i.e. paper boards supplied from Stora Enso Oyj. Having a grammage of approximately 240 g/m². The properties of the comparative coated substrates 1-3 were tested, and reported in Table IX.

### Inventive dispersion sample 7

This inventive dispersion was made according to the following procedure. One or more base polymer resins, one or more polymeric stabilizing agent resins, and one or more hydrophobic particulate fillers, as shown in Table VI, were selected, and fed into a twin screw extruder simultaneously. Specifically pellets of PRIMACOR 3150 and pellets of PRIMACOR 5980 were physically mixed together in a ratio of 70 parts PRIMACOR 3150 to 30 parts PRIMACOR 5980 prior to addition to the extruder with a Schenck Mechatron loss in weight solids feeder. The pressure in the extruder was maintained at 300 psi throughout the run. These components were melt blended in the compounding zone of the extruder thereby forming a melt blended compound. Subsequently, water and base was metered into the extruder, and the melt blended compound was contacted with water in the presence of the base. Further water was metered into the extruder thereby further diluting the dispersion. The formulations for inventive dispersions are reported in Table VI. The extrusion conditions are reported in Table VII.

### Inventive dispersion sample 8

This inventive dispersion was made according to the following procedure. One or more base polymer resins, one or more polymeric stabilizing agent resins, and one or more hydrophobic particulate fillers, as shown in Table VI, were selected, and fed into a twin screw extruder simultaneously. Specifically pellets of PRIMACOR 5980 were added to the extruder with a Schenck Mechatron loss in weight solids feeder. The pressure in the extruder was maintained at 300 psi throughout the run. These components were melt blended in the compounding zone of the extruder thereby forming a melt blended compound. Subsequently, water and base was metered into the extruder, and the melt blended compound was contacted with water in the presence of the base. Further water was metered into the extruder thereby further diluting the dispersion. The formulations for inventive dispersions are reported in Table VI. The extrusion conditions are reported in Table VII.

**Table VI**

| | | **Inventive Dispersion 5** | **Inventive Dispersion 6** | **Inventive Dispersion 7** | **Inventive Dispersion 8** | **Comparative Dispersion 1** | **Comparative Dispersion 2** | **Comparative Dispersion 3** |
|---|---|---|---|---|---|---|---|---|
| | Raw Material Solid Content [%] | --- | --- | --- | --- | --- | --- | --- |
| Sample 8.6 wt% CaCO₃: (AFFINITY 8200/PRIMACOR 5980i | 47.9 | 100 | --- | --- | --- | --- | --- | --- |
| Sample 14.6 wt% CaCO₃: (Affinity 8200/Primacor 5980i) | 51.0 | --- | 100 | --- | --- | --- | --- | --- |
| Sample 24.0 wt% CaCO₃ (PRIMACOR 3150 / PRIMACOR 5980i) | 45.7 | --- | --- | 100 | --- | --- | --- | --- |
| Sample 11.1 wt% CaCO₃ (PRIMACOR 5980i) | 27.7 | --- | --- | --- | 100 | --- | --- | --- |
| POD 8501 [control 2] (Affinity 8200/Primacor 5980i) | 47.7 | --- | --- | --- | --- | 100 | 100 | 100 |
| Setacarb (post addition of CaCo₃) from Omya | 75.0 | --- | --- | --- | --- | --- | 9.4 | 17.1 |
| Formulation Solid Content [%] | --- | 40 | 40 | 46 | 28 | 40 | 40 | 40 |
| pH-value | --- | 10.5 | 10.5 | 11.8 | 11.2 | 10.2 | 10.2 | 10.2 |

**Table VII**

| **Sample** | **Initial Water Flow Rate** (g/min) | **Base Flow Rate (base is 45 % wt KOH)** (g/min) | **Polymer Mix Flow Rate** (g/min) | **CaCO₃ Flow Rate** (g/min) | **Dilution Water Flow Rate** (g/min) | **Barrel Temp. °C.** | **Screw RPM** | **Vmean Particle Size (µm)** |
|---|---|---|---|---|---|---|---|---|
| Inventive Dispersion 4 | 12.7 | 2.9 | 68.0 | 7.6 | 63.2 | 150 | 400 | 0.51 |
| Inventive Dispersion 5 | 12.7 | 2.9 | 60.4 | 15.2 | 63.2 | 150 | 400 | 0.66 |
| Inventive Dispersion 6 | 46.9 | 8.8 | 113.5 | 27.5 | 120.0 | 170 | 600 | 2.83 |
| Inventive Dispersion 7 | 22.2 | 10.3 | 68.1 | 45.4 | 290 | 105 | 600 | 0.17 |
| Inventive Dispersion 8 | 33.4 | 22.5 | 102.2 | 11.4 | 235 | 105 | 600 | 0.14 |
| Comparative Dispersion 1 | 12.7 | 3.6 | 75.6 | 0 | 62.5 | 160 | 500 | 0.8 |

**Table VIII**

| 3M Kit Rating Test Results | |
|---|---|
| Sample | Flat Kit Rating Number |
| Inventive 4 | 12 |
| Inventive 5 | 12 |
| Comparative 1 | 12 |
| Comparative 2 | 12 |
| Comparative 3 | 12 |

**Table IX**

| **Dispersion** | **Cobb Test (g/m²) water uptake** | **WVTR (g/m²/24 hr) water vapor transmission rate (RH 50%, 25°C)** | **WVTR (g/m²/24 hr) water vapor transmission rate RH 90%, 38°C** | **OTR (cc/m²/day) Oxygen Transmission Rate** |
|---|---|---|---|---|
| Inventive Dispersion 4 | 4.4 | 11.9 | 288.7 | 21,460 |
| Inventive Dispersion 5 | 3.0 | 13.7 | 222.7 | 19,340 |
| Comparative Dispersion 1 | 14.5 | 37.1 | 670 | 24,422 |
| Comparative Dispersion 2 | 16.1 | 17.4 | 573.9 | 31,889 |
| Comparative Dispersion 3 | 14.5 | 19 | 599.3 | 23,601 |

### Inventive dispersion sample 9

Aqueous dispersions of pigments with polyolefin resins were prepared via an extruder where 30 g/min of PRIMACOR 5980i, available from The Dow Chemical Company, and 70 g/min of a low density polyethylene based red pigment color concentrate (15151 Red PE MB, available from Ampacet Corporation) were fed into a twin screw extruder to melt the resin and incorporate the pigment. The resin/pigment melt blend was forwarded and combined with 14.7 ml/min of a 26.3wt% potassium hydroxide solution. The resulting aqueous dispersion was forwarded within the extruder to the dilution zone where additional water was added to adjust the solids level to 35.0 weight percent. The product was cooled and exited the extruder into a collection vessel.

The subparticle types, grades, and Average Particle Size (in microns) for inventive dispersion samples 1-9 are reported in Table X.

**Table X**

| Description | Subparticle Type | Grade and Source | Average Particle Size (microns) | Used in Inventive Dispersion Sample No. |
|---|---|---|---|---|
| TiO2 | Titanium dioxide | TIPURE R-902plus; DuPont Corp. | 0.4 | 1,2,3 |
| Nanofine TiO₂ | Titanium dioxide | TAYCA MT-100TV; Presperse, Inc. | 0.015 | 4 |
| CaCO₃ | Calcium carbonate | ULTRA PFLEX 100 PCC; Specialty Minerals, Inc. | 0.07 | 5,6,7,8 |
| Red pigment masterbatch in polyethylene | Mixture of red and white pigments | 15151 RED; Ampacet Corp. | Pigment Red 53 0.07-0.5 | |
| | | | Pigment Red 48 0.15 | 9 |
| | | | Pigment White 6 0.2 | |

### Test Methods

Test methods include the following:
The Cobb water resistance test was measured via Tappi Test Method T 441 om-90 under the following conditions for coated paperboards:
   - Test period: 2 minutes
   - Sample size: 13 cm²
   - Amount of deionized water: 100 ml

The oxygen transmission rate (OTR) measurement was performed by measuring oxygen permeability using a measuring apparatus (Model OX-TRAN Model 2/21, manufactured by Mocon, Inc.) at a temperature of 23 °C and a relative humidity (RH) of 50 percent. Within this instrument, each measurement unit is composed of two cells, which are separated by the sample. In one cell carrier gas (nitrogen) is routed, where the other cell is flushed with a test gas (oxygen). Both gases have a defined temperature and relative humidity (RH). After the measurement is started, oxygen is allowed to enter the Coulox sensor. This sensor, when exposed to oxygen, generates an electrical current which is proportional to the amount of oxygen entered.

The water vapor transmission rate (WVTR) was measured using ASTM E96- 80 dish test. The test measures the transmission of moisture from a wet chamber through a test specimen (sheet) and into a dry chamber containing a desiccant.

### 3M Kit Test

Grease and oil kit testing liquids are made according to formulas shown in Table XI. Castor oil (USP Grade 99-100%), toluene (ACS Grade, 99.5% min. by gas chromatography), heptane (Reagent grade, 99.9% min. with 99.0% n-heptane) are purchased from VWR International.

**Table XI**

| Kit # | 1 | 2 | 3 | 4 | 5 | 6 | 7 | 8 | 9 | 10 | 11 | 12 |
|---|---|---|---|---|---|---|---|---|---|---|---|---|
| Castor Oil (g) | 100 | 90 | 80 | 70 | 60 | 50 | 40 | 30 | 20 | 10 | 0 | 0 |
| Toluene (g) | 0 | 5 | 10 | 15 | 20 | 25 | 30 | 35 | 40 | 45 | 50 | 45 |
| Heptane (g) | 0 | 5 | 10 | 15 | 20 | 25 | 30 | 35 | 40 | 45 | 50 | 55 |

The oil and grease resistance "Kit Test" is performed on the samples according to TAPPI UM 557 "Repellency of Paper and Board to Grease, Oil, and Waxes (Kit Test)." The Kit Test is a procedure for testing the degree of repellency of paper or paperboard having a coating.

The Kit Test is conducted as follows. Obtain five representative samples (5.08 cm x 5.08 cm) of each of the coated base papers. Deposit one drop of the Kit Rating Number test reagent onto a flat surface of the coated base paper having the coating composition of the present disclosure from a height of 2.54 cm. After 15 seconds, wipe away the excess Kit Rating Number test reagent with a clean tissue or cotton swatch. Immediately examine the surface of the coated base paper.

The coated base paper is assigned a failure if the test surface shows a pronounced darkening as compared to an untested coated base paper. If, however, the coated base paper passes, repeat the above described test with a new sample of coated base paper with the next higher Kit Rating Number test reagent until a failure Kit Rating Number test reagent is found. The average of the five highest passing Kit Rating Number test reagent rounded to the nearest 0.5 is reported as the flat Kit Rating Number for the coating composition on the coated base paper.

The present invention may be embodied in other forms without departing from the spirit and the essential attributes thereof, and, accordingly, reference should be made to the appended claims, rather than to the foregoing specification, as indicating the scope of the invention.

## Claims

1. A process for producing a dispersion comprising the steps of:
selecting one or more subparticles selected from the group consisting of oxides, mixed oxides, carbides, borides, and nitrides of elements of the main groups II to IV and/or elements of the sub-groups I to VIII of the periodic table including the lanthanides, having an average particle size diameter in the range of 0.01 to 9 µm;
selecting one or more base polymers;
selecting one or more stabilizing agents;
selecting water as a liquid media;
optionally selecting one or more neutralizing agents;
melt-blending said one or more base polymers in the presence of said one or more subparticles;
thereby at least partially encapsulating said one or more subparticles with said one or more base polymers;
contacting said at least partially encapsulated one or more subparticles with water as said liquid media and said one or more stabilizing agents and optionally one or more neutralizing agents;
dispersing said at least partially encapsulated one or more subparticles in water as said liquid media; wherein said at least partially encapsulated particles have an average particle size diameter in the range of 0.05 to 10 µm and thereby forming said dispersion.

2. A dispersion obtained by the process of claim 1 and comprising:
one or more subparticles selected from the group consisting of oxides,
mixed oxides, carbides, borides, and nitrides of elements of the main groups II to IV and/or elements of the sub-groups I to VIII of the periodic table including the lanthanides,
one or more base polymers, at least partially encapsulating said one or more subparticles; wherein said at least partially encapsulated one or more subparticles have an average particle size diameter in the range of 0.05 to 10 µm;
one or more stabilizing agents; and
water as a liquid media.

3. A dispersion according to claim 2, wherein the subparticles are selected from the group consisting of silicon dioxide, aluminum oxide, zinc oxide, cerium oxide, zirconium oxide, silicon dioxide, zirconium silicates, silicon carbides, wollastonites, aluminum silicates, aluminum hydroxide, aragonite, barium sulphate, calcite, calcium sulphate, magnesium hydroxide, magnesium carbonate, magnesite, ground calcium carbonate, precipitated calcium carbonate, titanium dioxide, satin white, silica, alumina trihydrate, mica, talc, clay, calcined clay, diatomaceous earth, vaterite, fumed silica, precipitated silica, carbon black, synthetic layered silicates, fluoro mica, natural layered silicates, hectorite, saponite, or vermiculite, nanoclays, zinc borate, milled glass, aluminum trihydrate, antimony trioxide, fly ash, or any combination thereof.

4. A dispersion according to claims 2 and 3, wherein the one or more base polymers can be selected from the group consisting of thermoplastic material and thermoset material.

5. A dispersion according to claims 2-4, wherein the one or more base polymers comprise one or more olefin based polymers, one or more acrylic based polymers, one or more polyester based polymers, one or more solid epoxy polymers, one or more thermoplastic polyurethane polymers, one or more styrenic based polymers, or combinations thereof.

6. A dispersion according to claims 2-5, wherein the one or more stabilizing agents promote the formation of a stable dispersion.

7. A dispersion according to claims 2-6, wherein the one or more stabilizing agents can be a surfactant, a polymer, or mixtures thereof.

## Patentansprüche

1. Verfahren zum Herstellen einer Dispersion, umfassend die Schritte von:
Auswählen eines oder mehrerer Subpartikel, ausgewählt aus der Gruppe, bestehend aus Oxiden, Mischoxiden, Carbiden, Boriden und Nitriden von Elementen der Hauptgruppen II bis IV und/oder Elementen der Nebengruppen I bis VIII des Periodensystems, einschließlich der Lanthanoide, mit einem durchschnittlichen Partikelgrößendurchmesser im Bereich von 0,01 bis 9 µm;
Auswählen eines oder mehrerer Grundpolymere;
Auswählen eines oder mehrerer Stabilisierungsmittel;
Auwählen von Wasser als ein flüssiges Medium;
gegebenenfalls Auswählen eines oder mehrerer Neutralisierungsmittel;
Schmelz-Mischen des einen oder der mehreren Grundpolymere in Gegenwart des einen oder der mehreren Subpartikel;
dadurch zumindest teilweises Einkapseln des einen oder der mehreren Subpartikel mit dem einen oder den mehreren Grundpolymeren;
Inkontaktbringen des/der zumindest teilweise eingekapselten einen oder mehreren Subpartikel(s) mit Wasser als das flüssige Medium und dem einen oder den mehreren Stabilisierungsmitteln und gegebenenfalls einen oder den mehreren Neutralisierungsmitteln;
Dispergieren des/der zumindest teilweise eingekapselten einen oder mehreren Subpartikel(s) in Wasser als das flüssige Medium; wobei die zumindest teilweise eingekapselten Partikel einen durchschnittlichen Partikelgrößendurchmesser im Bereich von 0,05 bis 10 µm aufweisen und dadurch Bilden der Dispersion.

2. Dispersion, erhalten durch das Verfahren nach Anspruch 1 und umfassend:
ein oder mehrere Subpartikel, ausgewählt aus der Gruppe, bestehend aus Oxiden, Mischoxiden, Carbiden, Boriden und Nitriden von Elementen der Hauptgruppen II bis IV und/oder Elementen der Nebengruppen I bis VIII des Periodensystems, einschließlich der Lanthanoide,
ein oder mehrere Grundpolymere, welche das eine oder die mehreren Subpartikel zumindest teilweise einkapseln; wobei der/die zumindest teilweise eingekapselte(n) eine oder mehreren Subpartikel einen durchschnittlichen Partikelgrößendurchmesser im Bereich von 0,05 bis 10 µm aufweisen;
ein oder mehrere Stabilisierungsmittel; und
Wasser als flüssiges Medium.

3. Dispersion nach Anspruch 2, wobei die Subpartikel ausgewählt sind aus der Gruppe, bestehend aus Siliciumdioxid, Aluminiumoxid, Zinkoxid, Calciumoxid, Ceroxid, Zirconiumoxid, Siliciumdixoid, Zirconiumsilikaten, Siliciumcarbiden, Wollastoniten, Aluminiumsilikaten, Aluminiumhydroxid, Aragonit, Bariumsulfat, Calcit, Calciumsulfat, Magnesiumhydroxid, Magnesiumcarbonat, Magnesit, gemahlenes Calciumcarbonat, gefälltes Calciumcarbonat, Titandioxid, Satinweiß, Silica, Aluminiumoxidtrihydrat, Glimmer, Talk, Ton, kalzinierter Ton, Diatomeenerde, Vaterit, gerauchtes Silica, gefälltes Silica, Ruß, synthetische geschichtete Silikate, Fluorglimmer, natürliche geschichtete Silicate, Hectorit, Saponit, oder Vermiculit, Nano-Ton, Zinkborat, gemahlenes Glas, Aluminiumtrihydrat, Antimontrioxid, Flugasche, oder irgendeine Kombination davon.

4. Dispersion nach Ansprüchen 2 und 3, wobei das eine oder die mehreren Grundpolymere ausgewählt sein können aus der Gruppe, bestehend aus thermoplastischem Material und Duroplastmaterial.

5. Dispersion nach Ansprüchen 2-4, wobei das eine oder die mehreren Grundpolymere ein oder mehrere Olefin-basierte Polymere, ein oder mehrere Acryl-basierte Polymere, ein oder mehrere Polyester-basierte Polymer, ein oder mehrere feste Epoxidpolymere, ein oder mehrere thermoplastische Polyurethanpolymere, ein oder mehrere Styrol-basierte Polymere, oder Kombinationen davon umfassen.

6. Dispersion nach Ansprüchen 2-5, wobei das eine oder die mehreren Stabilisierungsmittel die Bildung einer stabilen Dispersion fördern.

7. Dispersion nach Ansprüchen 2-6, wobei das eine oder die mehreren Stabilisierungsmittel ein oberflächenaktives Mittel, ein Polymer, oder Mischungen davon sein können.

## Revendications

1. Un procédé pour produire une dispersion comprenant les étapes consistant à :
sélectionner une ou plusieurs sous-particules sélectionnées dans le groupe consistant en des oxydes, des oxydes mixtes, des carbures, des borures, et des nitrures d'éléments des groupes principaux Il à IV et/ou d'éléments des sous-groupes I à VIII du tableau périodique incluant les lanthanides, ayant un diamètre de taille de particule moyen compris dans la gamme allant de 0,01 à 9 µm ;
sélectionner un ou plusieurs polymères de base ;
sélectionner un ou plusieurs agents stabilisants ;
sélectionner l'eau en tant que milieu liquide ;
sélectionner facultativement un ou plusieurs agents de neutralisation ;
mélanger en fusion de façon homogène lesdits un ou plusieurs polymères de base en présence desdites une ou plusieurs sous-particules ;
encapsuler de ce fait au moins partiellement lesdites une ou plusieurs sous-particules avec lesdits un ou plusieurs polymères de base ;
mettre en contact lesdites une ou plusieurs sous-particules encapsulées au moins partiellement avec de l'eau en tant que dit milieu liquide et avec lesdits un ou plusieurs agents stabilisants et facultativement un ou plusieurs agents de neutralisation ;
disperser lesdites une ou plusieurs sous-particules encapsulées au moins partiellement dans de l'eau en tant que dit milieu liquide ; lesdites particules encapsulées au moins partiellement ayant un diamètre de taille de particule moyen compris dans la gamme allant de 0,05 à 10 µm et former de ce fait ladite dispersion.

2. Une dispersion obtenue par le procédé de la revendication 1 et comprenant :
une ou plusieurs sous-particules sélectionnées dans le groupe consistant en des oxydes, des oxydes mixtes, des carbures, des borures, et des nitrures d'éléments des groupes principaux II à IV et/ou d'éléments des sous-groupes I à VIII du tableau périodique incluant les lanthanides,
un ou plusieurs polymères de base, encapsulant au moins partiellement lesdites une ou plusieurs sous-particules ; lesdites une ou plusieurs sous-particules encapsulées au moins partiellement ayant un diamètre de taille de particule moyen compris dans la gamme allant de 0,05 à 10 µm ;
un ou plusieurs agents stabilisants ; et
de l'eau en tant que milieu liquide.

3. Une dispersion selon la revendication 2, les sous-particules étant sélectionnées dans le groupe consistant en le dioxyde de silicium, l'oxyde d'aluminium, l'oxyde de zinc, l'oxyde de cérium, l'oxyde de zirconium, le dioxyde de silicium, des silicates de zirconium, des carbures de silicium, des wollastonites, des silicates d'aluminium, l'hydroxyde d'aluminium, l'aragonite, le sulfate de baryum, le calcite, le sulfate de calcium, l'hydroxyde de magnésium, le carbonate de magnésium, la magnésite, le carbonate de calcium broyé, le carbonate de calcium précipité, le dioxyde de titane, le blanc satin, la silice, le trihydrate d'alumine, le mica, le talc, l'argile, l'argile calcinée, la terre de diatomées, la vatérite, la silice sublimée, la silice précipitée, le noir de carbone, des silicates lamellaires synthétiques, le fluoro-mica, des silicates lamellaires naturels, l'hectorite, la saponite, ou la vermiculite, des nanoargiles, le borate de zinc, le verre broyé, le trihydrate d'aluminium, le trioxyde d'antimoine, des cendres volantes, ou toute combinaison de ceux-ci.

4. Une dispersion selon les revendications 2 et 3, les un ou plusieurs polymères de base pouvant être sélectionnés dans le groupe consistant en un matériau thermoplastique et un matériau thermodurci.

5. Une dispersion selon les revendications 2 à 4, les un ou plusieurs polymères de base comprenant un ou plusieurs polymères à base d'oléfine, un ou plusieurs polymères à base d'acrylique, un ou plusieurs polymères à base de polyester, un ou plusieurs polymères d'époxy solides, un ou plusieurs polymères de polyuréthane thermoplastique, un ou plusieurs polymères à base de styrène, ou des combinaisons de ceux-ci.

6. Une dispersion selon les revendications 2 à 5, les un ou plusieurs agents stabilisants favorisant la formation d'une dispersion stable.

7. Une dispersion selon les revendications 2 à 6, les un ou plusieurs agents stabilisants pouvant être un agent tensioactif, un polymère, ou des mélanges de ceux-ci.
